(19) Europäisches Patentamt
European Patent Office
Office européen des brevets

(11) **EP 4 040 401 A1**

(12) **EUROPEAN PATENT APPLICATION**

(43) Date of publication:
**10.08.2022  Bulletin 2022/32**

(21) Application number: **21197863.0**

(22) Date of filing: **21.09.2021**

(51) International Patent Classification (IPC):
**G06V 10/82** (2022.01)      **G06V 30/413** (2022.01)

(52) Cooperative Patent Classification (CPC):
**G06V 10/82; G06V 30/413**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.02.2021  CN 202110156565**

(71) Applicant: **BEIJING BAIDU NETCOM SCIENCE AND**
**TECHNOLOGY CO. LTD.**
**100085 Beijing (CN)**

(72) Inventors:
• **LI, Yulin**
 **Beijing, 100085 (CN)**

• **HUANG, Ju**
 **Beijing, 100085 (CN)**
• **XIE, Qunyi**
 **Beijing, 100085 (CN)**
• **QIN, Xiameng**
 **Beijing, 100085 (CN)**
• **ZHANG, Chengquan**
 **Beijing, 100085 (CN)**
• **LIU, Jingtuo**
 **Beijing, 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **IMAGE PROCESSING METHOD AND APPARATUS, DEVICE AND STORAGE MEDIUM**

(57)  The present disclosure discloses an image processing method and apparatus, a device and a storage medium, and relates to the field of artificial intelligence technologies, and particularly to the fields of computer vision technologies, deep learning technologies, or the like. The image processing method includes: acquiring a multi-modal feature of each of at least one text region in an image, the multi-modal feature including features in plural dimensions; performing a global attention processing operation on the multi-modal feature of each text region to obtain a global attention feature of each text region; determining a category of each text region based on the global attention feature of each text region; and constructing structured information based on text content and the category of each text region. The present disclosure may provide a more universal construction scheme for structured information in an image.

Acquire a multi-modal feature of each of at least one text region in an image, the multi-modal feature including features in plural dimensions — 101

Perform a global attention processing operation on the multi-modal feature of each text region to obtain a global attention feature of each text region — 102

Determine a category of each text region based on the global attention feature of each text region — 103

Construct structured information based on text content and the category of each text region — 104

Fig. 1

EP 4 040 401 A1

## Description

## Field of the Disclosure

The present disclosure relates to the field of artificial intelligence technologies, and particularly relates to the fields of computer vision technologies, deep learning technologies, or the like, and particularly to an image processing method and apparatus, a device and a storage medium.

## Background of the Disclosure

Artificial intelligence (AI) is a subject of researching how to cause a computer to simulate certain thought processes and intelligent behaviors (for example, learning, inferring, thinking, planning, or the like) of a human, and includes both hardware-level technologies and software-level technologies. Generally, the hardware technologies of the AI include technologies, such as a sensor, a dedicated artificial intelligence chip, cloud computing, distributed storage, big data processing, or the like; the software technologies of the AI mainly include a computer vision technology, a voice recognition technology, a natural language processing technology, a machine learning/deep learning technology, a big data processing technology, a knowledge graph technology, or the like.

A bill is an important text carrier for structured information and widely used in various business scenarios. In order to improve a bill processing efficiency, a paper bill may be photographed to obtain a bill image, and then, the unstructured bill image is converted into structured information.

In a related art, bill information is extracted at a fixed position of the bill image with a fixed layout based on a standard template.

## Summary of the Disclosure

The present disclosure provides an image processing method and apparatus, a device and a storage medium.

According to an aspect of the present disclosure, there is provided an image processing method, including: acquiring a multi-modal feature of each of at least one text region in an image, the multi-modal feature including features in plural dimensions; performing a global attention processing operation on the multi-modal feature of each text region to obtain a global attention feature of each text region; determining a category of each text region based on the global attention feature of each text region; and constructing structured information based on text content and the category of each text region.

According to another aspect of the present disclosure, there is provided an image processing apparatus, including: an acquiring unit configured to acquire a multi-modal feature of each of at least one text region in an image, the multi-modal feature including features in plural dimensions; a processing unit configured to perform a global attention processing operation on the multi-modal feature of each text region to obtain a global attention feature of each text region; a determining unit configured to determine a category of each text region based on the global attention feature of each text region; and a constructing unit configured to construct structured information based on text content and the category of each text region.

According to another aspect of the present disclosure, there is provided an electronic device, including: at least one processor; and a memory connected with the at least one processor communicatively, wherein the memory stores instructions executable by the at least one processor to enable the at least one processor to perform the method according to any one of the above-mentioned aspects.

According to another aspect of the present disclosure, there is provided a non-transitory computer readable storage medium with computer instructions stored thereon, wherein the computer instructions are used for causing a computer to perform the method according to any one of the above-mentioned aspects.

According to another aspect of the present disclosure, there is provided a computer program product including a computer program which, when executed by a processor, implements the method according to any one of the above-mentioned aspects.

The technical solution of the present disclosure may provide a more universal construction scheme for structured information in an image.

It should be understood that the statements in this section are not intended to identify key or critical features of the embodiments of the present disclosure, nor limit the scope of the present disclosure. Other features of the present disclosure will become apparent from the following description.

## Brief Description of Drawings

The drawings are used for better understanding the present solution and do not constitute a limitation of the present disclosure. In the drawings:

Fig. 1 is a schematic diagram according to a first embodiment of the present disclosure;
Fig. 2 is a schematic diagram according to a second embodiment of the present disclosure;
Fig. 3 is a schematic diagram according to a third embodiment of the present disclosure;
Fig. 4 is a schematic diagram according to a fourth embodiment of the present disclosure;
Fig. 5 is a schematic diagram according to a fifth embodiment of the present disclosure;
Fig. 6 is a schematic diagram according to a sixth embodiment of the present disclosure;
Fig. 7 is a schematic diagram according to a seventh embodiment of the present disclosure;

Fig. 8 is a schematic diagram according to an eighth embodiment of the present disclosure; and

Fig. 9 is a schematic diagram of an electronic device configured to implement any of image processing methods according to the embodiments of the present disclosure.

## Detailed Description of Preferred Embodiments

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and structures are omitted in the descriptions below.

In a related art, bill information is extracted at a fixed position of a bill image with a fixed layout based on a standard template, in which the standard template is required to be configured for the bill image with each fixed layout, only the bill image with the fixed layout may be processed, bill images with distortion and printing offset are difficult to process, and therefore, an application range is quite limited.

In order to solve the problem of the limited application range in the related art, the present disclosure provides some embodiments.

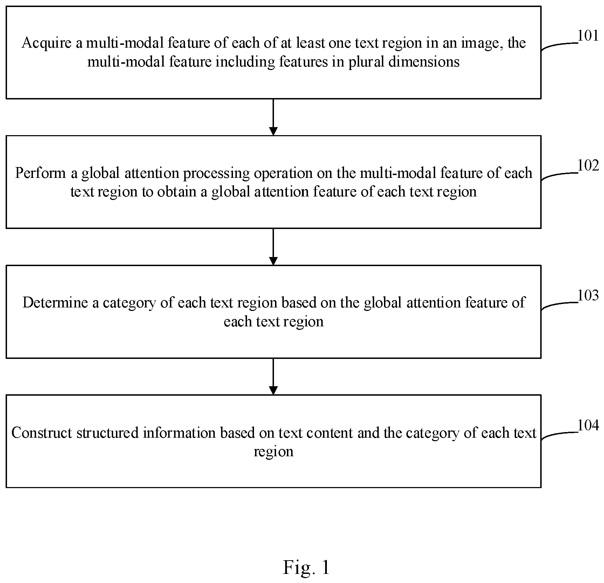

Fig. 1 is a schematic diagram according to a first embodiment of the present disclosure. The present embodiment provides an image processing method, including:

> 101: acquiring a multi-modal feature of each of at least one text region in an image, the multi-modal feature including features in plural dimensions.
> 102: performing a global attention processing operation on the multi-modal feature of each text region to obtain a global attention feature of each text region.
> 103: determining a category of each text region based on the global attention feature of each text region.
> 104: constructing structured information based on text content and the category of each text region.

The image refers to an image containing structured information, such as a bill image, a document image, or the like. The structured information may also be referred to as structured data, and is data which may be organized into a line and column structure and identified. Usually, such data is a record, or a file, or a field in data, and may be positioned precisely.

The at least one text region in the image is mostly a non-background text region in the image, a background text region refers to a text region of a bill itself; for example, the text region corresponding to the word "name" is the background text region, and the non-background text region may also be referred to as a printed text region, i.e., a text region of a printed text of the bill, for example, a specific name "XXX" corresponding to the word "name".

The features in plural dimensions included in the multi-modal feature may be a spatial feature, a semantic feature and a visual feature respectively; the spatial feature refers to a feature corresponding to position information, and the position information may be represented as: $S = \left\{ s_i \in \Re^4 \right\}$, with $s_i = (x_i, y_i, w_i, h_i)$; the semantic feature refers to a feature corresponding to the text content corresponding to the text region, and the text content may be represented as: $T = \{t_i\}$; the visual feature refers to a feature corresponding to an image feature of an image segment corresponding to the text region, and the image feature may be represented as: $F = \left\{ f_i \in \Re^{2048} \right\}$; wherein i is an index of the text region, and $(x_i, y_i, w_i, h_i)$ is the position information of the ith text region, and includes a position coordinate $(x_i, y_i)$ of a vertex at the upper left corner of a text box corresponding to the text region, and a width $w_i$ and a height $h_i$ of the text box.

After obtained, the multi-modal feature may be subjected to a self-attention processing operation, and then, a cross-attention processing operation may be performed on the feature obtained after the self-attention processing operation and the above-mentioned spatial feature, and the feature obtained after the cross-attention processing operation may be referred to as the global attention feature. The global attention feature fuses plural dimensions and cross information between the text regions, and may better reflect the features in plural dimensions and global features of the image.

After the global attention feature is obtained, the category of each text region may be determined using a classification network. The classification network has, for example, a full connection (FC) structure, and a classification function is, for example, a softmax function. The probability $p_{ij}$ of each text region in each preset category may be output through the classification network, $p_{ij}$ represents the probability of the ith text region in the jth category, and then, the category with the highest probability is used as the category of the corresponding text region. For example, if the maximum probability is $p_{i_0 j^*}$ for $i_0$, the $j^*$th category is taken as the category of the $i_0$ th text region.

After determination of the category corresponding to each text region, the structured information may be constructed based on the text content and the corresponding category of each text region; for example, the structured information is generally represented in a key-value manner, and therefore, a key-value of a piece of structured information may be formed by taking the category as a key and the text content as a value.

In the present embodiment, the category of each text region is determined, and the structured information may be constructed based on the category; the structured information is obtained based on identification of the category of the text region and not limited to the fixed position, thus providing a more universal extracting scheme for the structured information in the image. Further, the features in plural dimensions may be referred to during the processing operation based on the multi-modal feature, the global features may be referred to during the global attention processing operation of the multi-modal feature, and the processing operation based on the features in plural dimensions and the global features may not be limited by the distortion, printing offset, or the like, of the layout of the image or image content, thereby further expanding the application range.

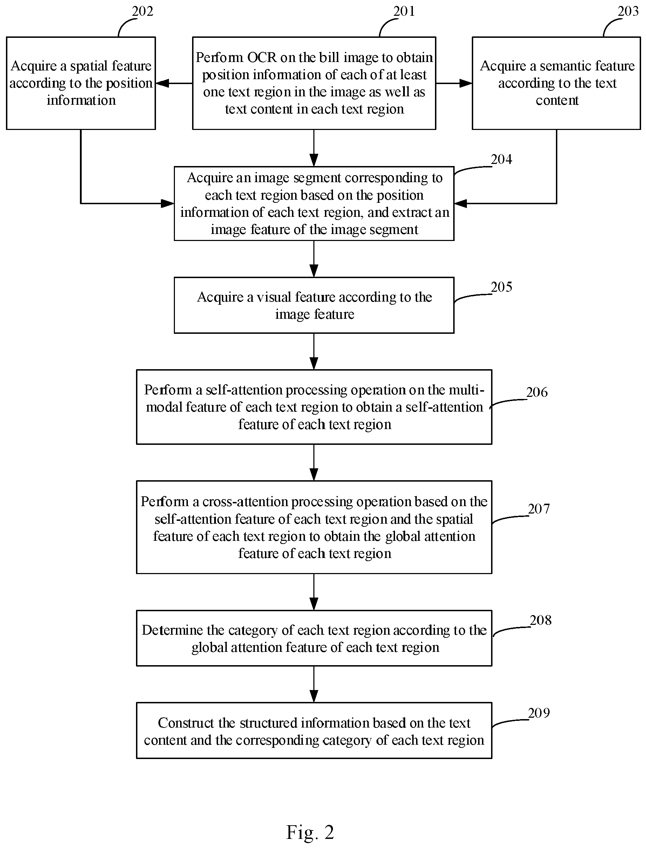

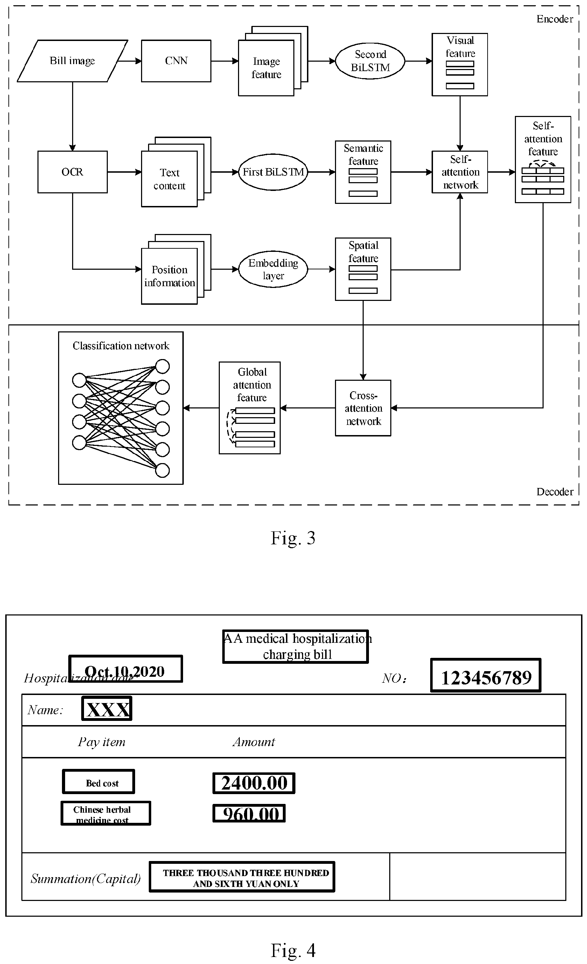

Fig. 2 is a schematic diagram according to a second embodiment of the present disclosure, and the present embodiment provides an image processing method. The present embodiment is described with the bill image as an example in conjunction with a network architecture diagram shown in Fig. 3, and the method includes:

201: performing optical character recognition (OCR) on the bill image to obtain position information of each of at least one text region in the image as well as text content in each text region.

In some embodiments, the OCR may include text detection and text recognition, the text detection refers to a step of performing text detection on the image using a text detection model, with the position information of each text region as an output, and the text recognition refers to a step of recognizing the text content in each text region using a text recognition model.

Both the text detection model and the text recognition model may be implemented using various related technologies.

In some embodiments, the text detection model is obtained by fine-tuning a pre-trained model, for example, an efficient and accurate scene text detector (EAST) model, using a training text region, and the training text region includes the non-background text region in a training image.

It may be understood that the training text region may also include a part of the background text region; for example, seeing Fig. 4, the training text region may also include a title in the bill, such as "AA medical hospitalization charging bill". The specifically included training text regions may be selected according to actual requirements, and the corresponding text regions may be correspondingly detected in the detection stage. In Fig. 4, the background text region of the bill image is represented by italics, the printed text region is represented by bold, and the text box may be marked corresponding to the text region through detection of the text detection model, the text box being generally rectangular and represented by thick lines. In Fig. 4, the printed text region corresponding to the hospitalization date has printing offset, but the category of the printed text region with the offset may be determined according to the processing operation according to the embodiment of the present disclosure, and the embodiment of the present disclosure may have a wider application range compared to the case where the printing offset is difficult to process in the related art.

By including the non-background text region in the training text region, more pertinence may be achieved.

After the position information of each text region is detected based on the text detection model, the corresponding image segment may be determined based on the position information to obtain each image segment, and then, each image segment is processed using the text recognition model, with the text content of the corresponding image segment as the output. The text recognition model is, for example, a convolutional recurrent neural network (CRNN) model.

202: acquiring a spatial feature according to the position information.

The position information may be represented as $S = \left\{ s_i \in \Re^4 \right\}$, with $s_i = (x_i, y_i, w_i, h_i)$.

After obtained, the position information may be used as an input to an embedding layer which converts the position information into a vector which may be referred to as a position vector. The embedding layer is for example implemented using a word2vec model.

203: acquiring a semantic feature according to the text content.

In some embodiments, a character vector corresponding to the text content may be used as the semantic feature; for example, the text content may be converted into a vector using the word2vec model, the vector may be referred to as a character vector, and then, the character vector may be used as the semantic feature.

Or in some embodiments, as shown in Fig. 3, the semantic vector is processed using a first bidirectional long short-term memory (BiLSTM), and a vector output by a hidden layer of the first BiLSTM is used as the semantic feature.

By performing the BiLSTM processing operation on the semantic vector, the more abstract semantic feature may be extracted to improve an accuracy of extracting structured information.

204: acquiring the image segment corresponding to each text region based on the position information of each text region, and extracting an image feature of the image segment.

Here, the image feature of the image segment may be extracted using a convolutional neural network (CNN), and a feature map output by the CNN may be used as the above-mentioned image feature.

Further, since the image segments may have inconsistent sizes, the image segments may be processed by pooling regions of interest (ROI). That is, the CNN may include a ROI pooling layer which has a function of processing feature maps with different sizes into feature representations with a same length. During specific implementation, the last pooling layer of the CNN may be replaced with the ROI pooling layer.

The image segments with different sizes may be processed using the ROI pooling layer.

It may be understood that the sequential relationships of 202 to 204 are not limited.

205: acquiring a visual feature according to the image feature.

In some embodiments, the image feature may be used as the visual feature; or

in some embodiments, for example, with reference to Fig. 3, the image feature is processed using a second BiLSTM, and a vector output by a hidden layer of the second BiLSTM is used as the visual feature.

By performing the BiLSTM processing operation on the image feature, the more abstract visual feature may be extracted to improve the accuracy of extracting the structured information.

It may be understood that "first", "second", or the like, in the embodiments of the present disclosure are only for distinguishing and do not represent a sequential order or an importance degree, or the like.

Using the above-mentioned processing operations, a multi-modal feature (i.e., the spatial feature, the semantic feature and the visual feature) may be obtained, which provides a basis for determining a category of the text region.

206: performing a self-attention processing operation on the multi-modal feature of each text region to obtain a self-attention feature of each text region.

For example, the visual feature, the spatial feature and the semantic feature are stitched corresponding to each text region, so as to obtain a stitched feature, and the stitched feature V is represented as: $V = \{F \square S \square T\}$.

After acquired, the stitched feature may be used as an input to a self-attention network, the self-attention processing operation is performed on the stitched feature using the self-attention network, and an output of the self-attention network may be referred to as the self-attention feature. A self-attention mechanism may resemble that of a model of bidirectional encoder representations from transformers (BERT).

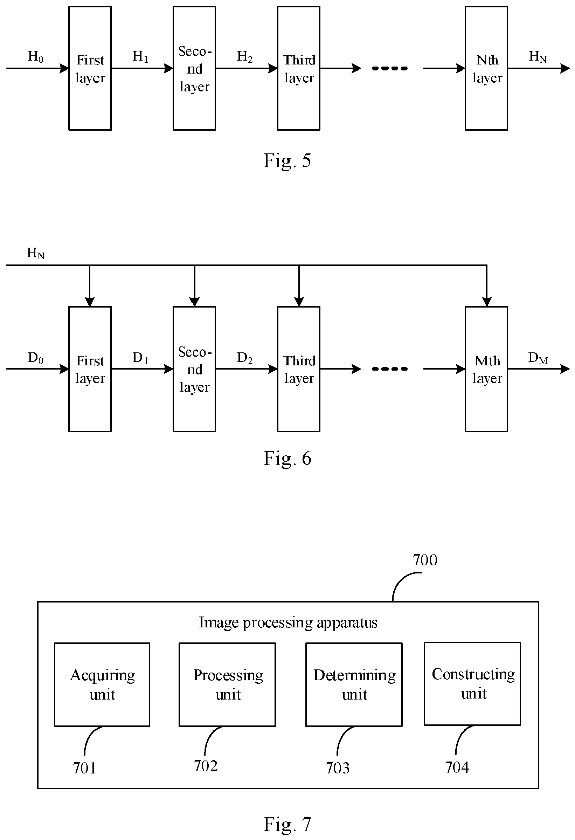

Specifically, referring to Fig. 5, the self-attention network may include a plurality of layers, for example, N layers, N is a settable value, and the plural layers are stacked; that is, an output of one layer serves as an input of the next layer, and the self-attention processing operation is performed on the input in each layer. The calculation formula is as follows:

$$H_0 = V$$

$$H_i = \sigma\left(\frac{(W_{i1}H_{i-1})(W_{i2}H_{i-1})^t}{\sqrt{d_{model}}}\right)H_{i-1}$$

wherein i is an index of the layer, $H_{i-1}$ is the input of the ith layer, and $H_i$ is the output of the ith layer; $\sigma(*)$ is an activation function which may be a sigmoid function; $W_{i1}$, $W_{i2}$ are two sets of parameters for the ith layer, and these two sets of parameters for different layers are not shared; $d_{model}$ is a dimension of $H_i$, and $H_1$ to $H_N$ have a same dimension.

The self-attention feature is the output of the last layer, $H_N$.

By performing the self-attention processing operation on the multi-modal feature, information fusing features in plural dimensions may be obtained, thus improving an accuracy of category judgment.

207: performing a cross-attention processing operation based on the self-attention feature of each text region and the spatial feature of each text region to obtain the global attention feature of each text region.

After acquired, the self-attention feature and the spatial feature may be used as inputs to a cross-attention network, the cross-attention processing operation is performed on the two inputs using the cross-attention network, and an output of the cross-attention network may be referred to as the global attention feature. A cross attention mechanism may resemble that of an existing cross attention network (CAN).

Specifically, referring to Fig. 6, the cross-attention network may include a plurality of layers, for example, M layers, M is a settable value, and the plural layers are stacked; that is, each layer has two inputs: the self-attention feature and the output of the previous layer, and the cross-attention processing operation is performed on the two inputs in each layer. The calculation formula is as follows:

$$D_0 = S$$

$$D_j = \sigma\left(\frac{(W_{j3}H_N)(W_{j4}D_{j-1})^t}{\sqrt{d_{model}}}\right)D_{j-1}$$

wherein j is an index of the layer, $D_{j-1}$ is the input of the jth layer, and $D_j$ is the output of the jth layer; $\sigma(*)$ is an activation function which may be a sigmoid function; $W_{j3}$, $W_{j4}$ are two sets of parameters for the jth layer, and these two sets of parameters for different layers are not shared; $d_{model}$ is a dimension of $D_j$, and $H_1$ to $H_N$ and $D_1$ to $D_N$

have a same dimension.

The global attention feature is the output of the last layer, $D_M$.

208: determining the category of each text region according to the global attention feature of each text region.

After acquired, the global attention feature of each text region may be used as an input to a classification network, and an output node of the classification network is consistent with a preset category, thereby outputting a probability of each text region in each category; then, for one text region, the category with the maximum probability may be selected as the category of the text region.

The preset category may be set according to actual requirements, for example, represented as: $Q=\{q_k; q_k \in$(bill number, name, date, aggregate amount...)\}.

Further, the classification networks in a training stage and an application stage may have different output nodes, and the number of the output nodes may be increased in the application stage, so as to support a capability of predicting the added category.

209: constructing the structured information based on the text content and the corresponding category of each text region.

For example, if the text region corresponding to the name "XXX" has the highest probability in the category "name", the category of "XXX" is determined as "name", and then, a piece of structured information with "name" as a key and "XXX" as a value may be constructed.

In the present embodiment, the structured information is constructed based on the preset category, which may achieve the extraction of the information from photos of the bill and a document with unfixed layouts, thus expanding a service range covered by bill and document photo identification, and laying a foundation for a large-scale recognition pre-training operation for images containing structured information.

Fig. 7 is a schematic diagram according to a seventh embodiment of the present disclosure, and this embodiment provides an image processing apparatus. As shown in Fig. 7, the apparatus 700 includes an acquiring unit 701, a processing unit 702, a determining unit 703 and a constructing unit 704.

The acquiring unit 701 is configured to acquire a multi-modal feature of each of at least one text region in an image, the multi-modal feature including features in plural dimensions; the processing unit 702 is configured to perform a global attention processing operation on the multi-modal feature of each text region to obtain a global attention feature of each text region; the determining unit 703 is configured to determine a category of each text region based on the global attention feature of each text region; and the constructing unit 704 is configured to construct structured information based on text content and the category of each text region.

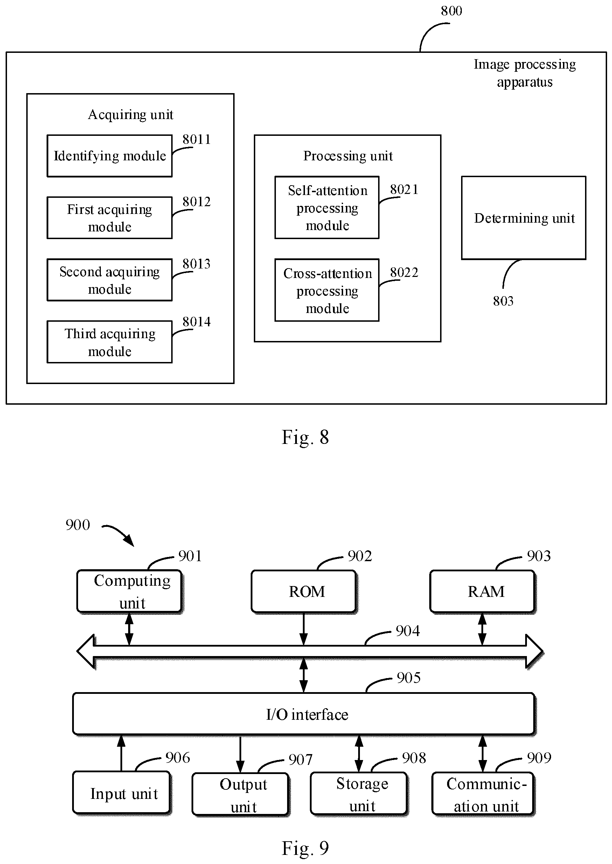

In some embodiments, referring to Fig. 8, there is provided another image processing apparatus 800, including an acquiring unit 801, a processing unit 802, a determining unit 803 and a constructing unit 804.

In some embodiments, the processing unit 802 includes a self-attention processing module 8021 and a cross-attention processing module 8022.

The self-attention processing module 8021 is configured to perform a self-attention processing operation on a multi-modal feature of each text region to obtain a self-attention feature of each text region; the cross-attention processing module 8022 is configured to perform a cross-attention processing operation based on the self-attention feature of each text region and a spatial feature of each text region to obtain a global attention feature of each text region.

In some embodiments, the multi-modal feature includes a spatial feature, a semantic feature and a visual feature, and the acquiring unit 801 includes an identifying module 8011, a first acquiring module 8012, a second acquiring module 8013 and a third acquiring module 8014.

The identifying module 8011 is configured to perform OCR on an image to obtain position information of each of at least one text region in the image as well as text content in each text region; the first acquiring module 8012 is configured to acquire the spatial feature according to the position information; the second acquiring module 8013 is configured to acquire the semantic feature according to the text content; the third acquiring module 8014 is configured to acquire an image segment corresponding to each text region based on the position information of each text region, extract an image feature of the image segment, and acquire the visual feature according to the image feature.

In some embodiments, the second acquiring module 8013 is specifically configured to use a character vector corresponding to the text content as the semantic feature; or process the semantic feature using a first BiLSTM, and use a vector output by a hidden layer of the first BiLSTM as the semantic feature.

In some embodiments, the third acquiring module 8014 is specifically configured to use the image feature as the visual feature; or process the image feature using a second BiLSTM, and use a vector output by a hidden layer of the second BiLSTM as the visual feature.

In some embodiments, the third acquiring module 8014 is specifically configured to extract the image feature of the image segment using a CNN including a ROI pooling layer.

In some embodiments, the OCR includes text detection, the identifying module 8011 is specifically configured to perform text detection on the image using a text detection model, the text detection model is obtained by fine-tuning a pre-trained model using a training text region, and the training text region includes a non-background text region in a training image.

In the present embodiment, the category of each text region is determined, and the structured information may be constructed based on the category; the structured information is obtained based on identification of the category of the text region and not limited to the fixed position, thus providing a more universal constructing scheme for the structured information in the image. Further, the features in plural dimensions may be referred to during the processing operation based on the multimodal feature, global features may be referred to during the global attention processing operation of the multimodal feature, and the processing operation based on the features in plural dimensions and the global features may not be limited by the distortion, printing offset, or the like, of the layout of the image or image content, thereby further expanding the application range.

It may be understood that reference may be made between the same or corresponding content in different embodiments of the present disclosure, and for the content not described in detail in the embodiments, reference may be made to the related content in other embodiments.

According to the embodiment of the present disclosure, there are also provided an electronic device, a readable storage medium and a computer program product.

Fig. 9 shows a schematic block diagram of an exemplary electronic device 900 which may be configured to implement the embodiments of the present disclosure. The electronic device is intended to represent various forms of digital computers, such as laptop computers, desktop computers, workstations, servers, blade servers, mainframe computers, and other appropriate computers. The electronic device may also represent various forms of mobile apparatuses, such as personal digital assistants, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 9, the electronic device 900 includes a computing unit 901 which may perform various appropriate actions and processing operations according to a computer program stored in a read only memory (ROM) 902 or a computer program loaded from a storage unit 908 into a random access memory (RAM) 903. Various programs and data necessary for the operation of the electronic device 900 may be also stored in the RAM 903. The computing unit 901, the ROM 902, and the RAM 903 are connected with each other through a bus 904. An input/output (I/O) interface 905 is also connected to the bus 904.

The plural components in the electronic device 900 are connected to the I/O interface 905, and include: an input unit 906, such as a keyboard, a mouse, or the like; an output unit 907, such as various types of displays, speakers, or the like; the storage unit 908, such as a magnetic disk, an optical disk, or the like; and a communication unit 909, such as a network card, a modem, a wireless communication transceiver, or the like. The communication unit 909 allows the electronic device 900 to exchange information/data with other devices through a computer network, such as the Internet, and/or various telecommunication networks.

The computing unit 901 may be a variety of general and/or special purpose processing components with processing and computing capabilities. Some examples of the computing unit 901 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 901 performs the methods and processing operations described above, such as the image processing method. For example, in some embodiments, the image processing method may be implemented as a computer software program tangibly contained in a machine readable storage medium, such as the storage unit 908. In some embodiments, part or all of the computer program may be loaded and/or installed into the electronic device 900 via the ROM 902 and/or the communication unit 909. When the computer program is loaded into the RAM 903 and executed by the computing unit 901, one or more steps of the image processing method described above may be performed. Alternatively, in other embodiments, the computing unit 901 may be configured to perform the image processing method by any other suitable means (for example, by means of firmware).

Various implementations of the systems and technologies described herein above may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present disclosure may be written in any combination of one or more programming languages. These program codes may be provided to a processor or a controller of a general purpose computer, a special purpose computer, or other programmable data processing apparatuses, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present disclosure, the machine readable storage medium may be a tangible medium which may contain or store a program for use by or in connection with an instruction execution system, apparatus, or device. The machine readable medium may be a machine readable signal medium or a machine readable storage medium. The machine readable storage medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server, also called a cloud computing server or a cloud host, and is a host product in a cloud computing service system, so as to overcome the defects of high management difficulty and weak service expansibility in conventional physical host and virtual private server (VPS) service. The server may also be a server of a distributed system, or a server incorporating a blockchain.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

## Claims

1. An image processing method, comprising:

   acquiring (101) a multi-modal feature of each of at least one text region in an image, the multi-modal feature comprising features in plural dimensions;
   performing (102) a global attention processing operation on the multi-modal feature of each text region to obtain a global attention feature of each text region;
   determining (103) a category of each text region based on the global attention feature of each text region; and
   constructing (104) structured information based on text content and the category of each text region.

2. The method according to claim 1, wherein the performing a global attention processing operation on the multi-modal feature of each text region to obtain a global attention feature of each text region comprises:

   performing (206) a self-attention processing operation on the multi-modal feature of each text region to obtain a self-attention feature of each text region; and

performing (207) a cross-attention processing operation based on the self-attention feature of each text region and a spatial feature of each text region to obtain the global attention feature of each text region.

3. The method according to claim 1 or 2, wherein the multi-modal feature comprises the spatial feature, a semantic feature and a visual feature, and the acquiring a multi-modal feature of each of at least one text region in an image comprises:

performing (201) optical character recognition on the image to obtain position information of each of the at least one text region in the image as well as the text content in each text region;
acquiring (202) the spatial feature according to the position information;
acquiring (203) the semantic feature according to the text content; and
acquiring (204) an image segment corresponding to each text region based on the position information of each text region, extracting an image feature of the image segment, and acquiring the visual feature according to the image feature.

4. The method according to claim 3, wherein the acquiring the semantic feature according to the text content comprises:

using a character vector corresponding to the text content as the semantic feature; or
processing the semantic vector using a first bidirectional long short-term memory (BiLSTM), and using a vector output by a hidden layer of the first BiLSTM as the semantic feature.

5. The method according to claim 3, wherein the acquiring the visual feature according to the image feature comprises:

using the image feature as the visual feature; or
processing the image feature using a second BiLSTM, and using a vector output by a hidden layer of the second BiLSTM as the visual feature.

6. The method according to claim 3, wherein the extracting an image feature of the image segment comprises:
extracting the image feature of the image segment using a CNN comprising a region-of-interest pooling layer.

7. The method according to claim 3, wherein the optical character recognition comprises text detection, and the performing optical character recognition on the image comprises:
performing text detection on the image using a text detection model, the text detection model being obtained by fine-tuning a pre-trained model using a training text region, and the training text region comprising a non-background text region in a training image.

8. An image processing apparatus (700), comprising:

an acquiring unit (701) configured to acquire a multi-modal feature of each of at least one text region in an image, the multi-modal feature comprising features in plural dimensions;
a processing unit (702) configured to perform a global attention processing operation on the multi-modal feature of each text region to obtain a global attention feature of each text region;
a determining unit (703) configured to determine a category of each text region based on the global attention feature of each text region; and
a constructing unit (704) configured to construct structured information based on text content and the category of each text region.

9. The apparatus (700) according to claim 8, wherein the processing unit (702) comprises:

a self-attention processing module (8021) configured to perform a self-attention processing operation on the multi-modal feature of each text region to obtain a self-attention feature of each text region; and
a cross-attention processing module (8022) configured to perform a cross-attention processing operation based on the self-attention feature of each text region and a spatial feature of each text region to obtain the global attention feature of each text region.

10. The apparatus (700) according to claim 8 or 9, wherein the multi-modal feature comprises the spatial feature, a semantic feature and a visual feature, and the acquiring unit comprises:

an identifying module (8011) configured to perform optical character recognition on the image to obtain position information of each of the at least one text region in the image as well as the text content in each text region;
a first acquiring module (8012) configured to acquire the spatial feature according to the position information;
a second acquiring module (8013) configured to acquire the semantic feature according to the text content; and
a third acquiring module (8014) configured to acquire an image segment corresponding to each text region based on the position information of each text region, extract an image feature of the image segment, and acquire the visual feature according to the image feature.

**11.** The apparatus (700) according to claim 10, wherein the second acquiring module (8013) is specifically configured to:

use a character vector corresponding to the text content as the semantic feature; or
process the semantic vector using a first bidirectional long short-term memory (BiLSTM), and use a vector output by a hidden layer of the first BiLSTM as the semantic feature.

**12.** The apparatus (700) according to claim 10, wherein the third acquiring module (8014) is specifically configured to:

use the image feature as the visual feature; or
process the image feature using a second BiLSTM, and use a vector output by a hidden layer of the second BiLSTM as the visual feature.

**13.** An electronic device, comprising:

at least one processor; and
a memory connected with the at least one processor communicatively;
wherein the memory stores instructions executable by the at least one processor to cause the at least one processor to perform the method according to any one of claims 1 to 7.

**14.** A non-transitory computer readable storage medium storing computer instructions for causing a computer to perform the method according to any one of claims 1 to 7.

**15.** A computer program product comprising a computer program which, when executed by a processor, implements the method according to any one of claims 1 to 7.

Acquire a multi-modal feature of each of at least one text region in an image, the multi-modal feature including features in plural dimensions — 101

Perform a global attention processing operation on the multi-modal feature of each text region to obtain a global attention feature of each text region — 102

Determine a category of each text region based on the global attention feature of each text region — 103

Construct structured information based on text content and the category of each text region — 104

Fig. 1

Acquire a spatial feature according to the position information
— 202

Perform OCR on the bill image to obtain position information of each of at least one text region in the image as well as text content in each text region
— 201

Acquire a semantic feature according to the text content
— 203

Acquire an image segment corresponding to each text region based on the position information of each text region, and extract an image feature of the image segment
— 204

Acquire a visual feature according to the image feature
— 205

Perform a self-attention processing operation on the multi-modal feature of each text region to obtain a self-attention feature of each text region
— 206

Perform a cross-attention processing operation based on the self-attention feature of each text region and the spatial feature of each text region to obtain the global attention feature of each text region
— 207

Determine the category of each text region according to the global attention feature of each text region
— 208

Construct the structured information based on the text content and the corresponding category of each text region
— 209

Fig. 2

Fig. 3

Fig. 4

$H_0$ → | First layer | → $H_1$ → | Seco-nd layer | → $H_2$ → | Third layer | → • • • • → | Nth layer | → $H_N$ →

**Fig. 5**

$H_N$ ↓ ↓ ↓ ↓

$D_0$ → | First layer | → $D_1$ → | Seco-nd layer | → $D_2$ → | Third layer | → • • • • → | Mth layer | → $D_M$ →

**Fig. 6**

700

Image processing apparatus

| Acquiring unit | Processing unit | Determining unit | Constructing unit |

701  702  703  704

**Fig. 7**

800

Image processing apparatus

Acquiring unit

Identifying module    8011

First acquiring module    8012

Second acquiring module    8013

Third acquiring module    8014

Processing unit

Self-attention processing module    8021

Cross-attention processing module    8022

Determining unit

803

Fig. 8

900

Computing unit    901

ROM    902

RAM    903

904

905

I/O interface

Input unit    906

Output unit    907

Storage unit    908

Communic-ation unit    909

Fig. 9

Europäisches
Patentamt

European
Patent Office

Office européen
des brevets

## EUROPEAN SEARCH REPORT

Application Number

**EP 21 19 7863**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 001 368 A (BEIJING BAIDU NETCOM SCI & TEC) 27 November 2020 (2020-11-27) * paragraphs [0043], [0044], [0047], [0048], [0049], [0051] * ----- | 1-15 | INV. G06V10/82 G06V30/413 |
| A | CN 111 709 339 A (BEIJING BAIDU NETCOM SCI & TEC) 25 September 2020 (2020-09-25) * the whole document * ----- | 1-15 | |

TECHNICAL FIELDS
SEARCHED    (IPC)

**G06V**

The present search report has been drawn up for all claims

| Place of search | Date of completion of the search | Examiner |
|---|---|---|
| **The Hague** | **7 March 2022** | **Stan, Johann** |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ..................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 19 7863

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2022

| Patent document cited in search report | | Publication date | Patent family member(s) | | Publication date |
|---|---|---|---|---|---|
| CN 112001368 | A | 27-11-2020 | CN | 112001368 A | 27-11-2020 |
| | | | EP | 3839818 A2 | 23-06-2021 |
| | | | US | 2021201182 A1 | 01-07-2021 |
| CN 111709339 | A | 25-09-2020 | CN | 111709339 A | 25-09-2020 |
| | | | EP | 3836016 A1 | 16-06-2021 |
| | | | JP | 2021197154 A | 27-12-2021 |
| | | | KR | 20210152931 A | 16-12-2021 |
| | | | US | 2021383107 A1 | 09-12-2021 |

EPO FORM P0459

For more details about this annex : see Official Journal of the European Patent Office, No. 12/82